# EUROPEAN PATENT APPLICATION

(11) **EP 4 682 109 A1**
(43) Date of publication of application: **21.01.2026**
(21) Application number: 24770428.1
(22) Date of filing: 20.02.2024
(51) Int. Cl.: C01G 53/00, H01M 4/505, H01M 4/525

(54) **LITHIUM-METAL COMPLEX OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(30) Priority: 16.03.2023 JP 2023041840
(71) Applicant: Sumitomo Chemical Company, Limited, Tokyo 103-6020 (JP)
(72) Inventor: IWASAKI, Kentaro, Niihama-shi, Ehime 792-8521 (JP)
(74) Representative: Vossius & Partner Patentanwälte Rechtsanwälte mbB
(86) International application number: PCT/JP2024/006037
(87) International publication number: WO 2024/190315

(57) **Abstract**

A lithium-metal composite oxide contains at least Ni, in which the lithium-metal composite oxide contains a plurality of particles, in a powder X-ray diffraction measurement of the lithium-metal composite oxide using a CuKα ray, in a case where a diffraction peak on a low-angle side in a range of 2θ = 38.0 ± 0.5° is defined as a peak A and a diffraction peak on a high-angle side is defined as a peak B, a ratio A/B of a half-width of the peak A to a half-width of the peak B is 1.35 or more and 2.25 or less, and an average convexity of the lithium-metal composite oxide is 0.971 or more and 1.000 or less.

## Description

### TECHNICAL FIELD

The present invention relates to a lithium-metal composite oxide, a positive electrode active material for a lithium secondary battery, a positive electrode for a lithium secondary battery, and a lithium secondary battery.

Priority is claimed on Japanese Patent Application No. 2023-041840, filed March 16, 2023, the content of which is incorporated herein by reference.

### BACKGROUND ART

During charging and discharging of a lithium secondary battery, a deintercalation reaction and an intercalation reaction of lithium ions occur from a surface of a positive electrode active material for a lithium secondary battery. Therefore, a surface morphology of the positive electrode active material for a lithium secondary battery affects the performance of the lithium secondary battery.

For example, Patent Document 1 discloses that wettability with respect to a nonaqueous electrolyte (electrolytic liquid) is improved and high-rate discharge performance is achieved by controlling a secondary particle shape of the positive electrode active material for a lithium secondary battery. Specifically, an average value of ratios of areas of regions surrounded by the shortest envelope line connecting vertices of convex portions of a two-dimensional image of the secondary particles to an area of the two-dimensional image is more than 1 and less than 2.

In addition, it is known that the performance of the lithium secondary battery depends on a crystal structure of a lithium-metal composite oxide contained in a positive electrode active material. As disclosed in Patent Document 2, it is known that the improvement of output in a low SOC range, the improvement of high-rate discharge performance, the improvement of high voltage characteristics, and the like can be achieved by using, as a positive electrode active material, a lithium transition-metal composite oxide in which a range of a half-width of a diffraction peak obtained by a (003) plane and a range of a half-width of a diffraction peak obtained by a (104) plane, and a range of a ratio thereof are specified.

### Prior Art Documents

### Patent Documents

Patent Document 1: JP-A-2004-362781
Patent Document 2: JP-A-2015-43332

### SUMMARY OF INVENTION

### Problem to be Solved by Invention

When the particle shape and the crystal structure of the lithium-metal composite oxide are controlled from another aspect, there is room for improvement in the rate performance of the lithium secondary battery.

The present invention has been made in view of the above-described circumstances, and an object of the present invention is to provide a lithium-metal composite oxide capable of obtaining a lithium secondary battery having high rate performance by controlling a particle shape and a crystal structure of the lithium-metal composite oxide, a positive electrode active material for a lithium secondary battery using the same, a positive electrode for a lithium secondary battery, and a lithium secondary battery.

### Solution to Problem

The present invention has the following aspects.
[1] A lithium-metal composite oxide containing at least Ni, in which the lithium-metal composite oxide contains a plurality of particles, in a powder X-ray diffraction measurement of the lithium-metal composite oxide using a CuKα ray, in a case where a diffraction peak on a low-angle side in a range of 2θ = 38.0 ± 0.5° is defined as a peak A and a diffraction peak on a high-angle side is defined as a peak B, a ratio A/B of a half-width of the peak A to a half-width of the peak B is 1.35 or more and 2.25 or less, and
   an average convexity of the lithium-metal composite oxide is 0.971 or more and 1.000 or less.
[2] The lithium-metal composite oxide according to [1], in which an average aspect ratio of particles having an area-equivalent circular diameter of 1 µm or more and 5 µm or less, which are contained in the lithium-metal composite oxide, is 0.770 or more and 0.798 or less.
[3] The lithium-metal composite oxide according to [1] or [2], in which an average circularity of particles having an area-equivalent circular diameter of 1 µm or more and 5 µm or less, which are contained in the lithium-metal composite oxide, is 0.920 or more and 0.954 or less.
[4] The lithium-metal composite oxide according to any one of [1] to [3], in which the lithium-metal composite oxide is represented by the following compositional formula (A),

   Li[Liₓ(Ni_{(1-a-b)}M1ₐM2_{b})₁₋ₓ]O₂ ... (A)

   (in the compositional formula (A), M1 is one or more elements selected from the group consisting of Co, Mn, and Al, M2 is one or more elements selected from the group consisting of Cu, Ti, Mg, W, Mo, Nb, Zn, Sn, Zr, Ga, B, Si, S, and P, and the compositional formula (A) satisfies -0.1 ≤ x ≤ 0.2, 0 ≤ a ≤ 0.2, and 0 ≤ b ≤ 0.1).
[5] A positive electrode active material for a lithium secondary battery, including the lithium-metal composite oxide according to any one of [1] to [4].
[6] A positive electrode for a lithium secondary battery, including the positive electrode active material for a lithium secondary battery according to [5].
[7] A lithium secondary battery including the positive electrode for a lithium secondary battery according to [6].

### Effects of Invention

According to the above-described aspect, it is possible to provide a lithium-metal composite oxide capable of obtaining a lithium secondary battery having high rate performance by controlling a particle shape and a crystal structure of the lithium-metal composite oxide, a positive electrode active material for a lithium secondary battery using the same, a positive electrode for a lithium secondary battery, and a lithium secondary battery.

### BRIEF DESCRIPTION OF DRAWINGS

[FIG. 1] A schematic view representing an example of a lithium secondary battery.
[FIG. 2] A schematic view representing an example of an all-solid-state lithium secondary battery.

### DESCRIPTION OF EMBODIMENTS

Hereinafter, the lithium-metal composite oxide according to the aspect of the present invention will be described. In a plurality of embodiments to be described below, preferable examples or conditions may be shared. In addition, in the present specification, each term is defined as follows.

In the present specification, a lithium-metal composite oxide will be referred to as "LiMO"; a metal composite compound will be referred to as "MCC"; and a positive electrode active material for a lithium secondary battery (cathode active material for a lithium secondary battery) will be referred to as "CAM".

"Ni" refers to a nickel atom, not a nickel metal. Similarly, "Co", "Li", and the like also each refer to a cobalt atom, a lithium atom, or the like. A lithium secondary battery refers to a lithium ion secondary battery.

In a case where a numerical range is described as, for example, "1 to 10 µm", the numerical range means a range from 1 µm to 10 µm, and means a numerical range including 1 µm as a lower limit value and 10 µm as an upper limit value. In addition, the upper limit value and the lower limit value of the numerical range can be optionally combined. Furthermore, numerical ranges of the respective physical properties, compositions, manufacturing conditions, and the like can be optionally combined.

"Composition analysis of LiMO" is performed by the following method. For example, a composition of the LiMO can be analyzed using an inductively coupled plasma emission spectrometer (for example, SPS3000 manufactured by Seiko Instruments Inc.) after the LiMO is dissolved in hydrochloric acid.

**In** the present specification, "Manufacturing of positive electrode for lithium secondary battery" is performed by the following method. A paste-like positive electrode mixture is prepared by kneading the LiMO, a conductive material (acetylene black), and a binder (PVdF) in a composition of LiMO:conductive material:binder = 92:5:3 (mass ratio). During the preparation of the positive electrode mixture, N-methyl-2-pyrrolidone is used as an organic solvent.

The obtained positive electrode material mixture is applied onto an Al foil having a thickness of 40 µm, which is to serve as a current collector, and dried in a vacuum at 150°C for 8 hours, thereby obtaining a positive electrode for a lithium secondary battery. An electrode area of the positive electrode for a lithium secondary battery is set to 1.65 cm².

In the present specification, "Manufacturing of lithium secondary battery" is performed by the following method. The following operation is carried out in a glove box under an argon atmosphere. The positive electrode for a lithium secondary battery, manufactured in "Manufacturing of positive electrode for lithium secondary battery", is placed on the lower lid of a part for a coin-type battery R2032 (manufactured by Hohsen Corp.) with the aluminum foil surface facing downward, and a laminated film separator is placed thereon. As the separator, a polypropylene porous film having a thickness of 25 µm is used. 300 µl of an electrolytic solution is injected therein. As the electrolytic solution, a liquid obtained by dissolving LiPF₆ in a mixed solution containing ethylene carbonate, dimethyl carbonate, and ethyl methyl carbonate at a volume ratio of 16:10:74 with a proportion of 1.3 mol/L is used. Next, lithium metal is used as a negative electrode, and the negative electrode is placed on an upper side of the separator, covered with an upper lid via a gasket and caulked with a caulking machine, thereby producing a lithium secondary battery (coin type half cell R2032).

A discharge rate test is carried out under the following conditions using the lithium secondary battery produced as described above, and a discharge capacity (mAh/g) is calculated and defined as "rate performance".

### · Discharge rate test

Test temperature: 25°C
Charging maximum voltage: 4.3 V, charging current: 0.2 CA, constant current constant voltage charging
Discharging minimum voltage: 2.5 V, discharging current density: 3 CA, constant current discharging

### <Lithium-metal composite oxide>

The LiMO according to the present embodiment contains at least Ni, in which the LiMO contains a plurality of particles, in a powder X-ray diffraction measurement of the LiMO using a CuKα ray, in a case where a diffraction peak on a low-angle side in a range of 2θ = 38.0 ± 0.5° is defined as a peak A and a diffraction peak on a high-angle side is defined as a peak B, a ratio A/B of a half-width of the peak A to a half-width of the peak B is 1.35 to 2.25, and an average convexity of the LiMO is 0.971 to 1.000.

The above-described LiMO contains a plurality of particles. In other words, the LiMO is in a powder form. The LiMO may contain only secondary particles, or may be a mixture of primary particles and secondary particles.

The "primary particles" mean particles in which apparently no grain boundary is present in a case of observing the particle in a visual field of 5,000 times using a scanning electron microscope or the like.

The "secondary particles" are particles in which the above-described primary particles are aggregated. That is, the secondary particles are an aggregate of the primary particles.

"Measurement of A/B" is performed by the following method.

First, using an X-ray diffractometer (for example, Ultima IV manufactured by Rigaku Corporation), a powder X-ray diffraction diagram is obtained by performing measurement in a range of a diffraction angle 2θ = 10° to 90° using a CuKα ray source. Using a powder X-ray diffraction pattern comprehensive analysis software JADE 5, a half-width of a peak A which is a diffraction peak on a low-angle side in a range of a diffraction angle 2θ = 38.0 ± 0.5°, and a half-width of a peak B which is a diffraction peak on a high-angle side are calculated from the powder X-ray diffraction diagram. Next, a ratio A/B of the half-width of the peak A to the half-width of the peak B is calculated. The diffraction angle of the peak A is, for example, 20 = 38.0 ± 0.1°, and the diffraction angle of the peak B is, for example, 2θ = 38.3 ± 0.1°.

The peak A is a peak corresponding to a (006) plane of a unit cell which is the minimum unit in a crystal structure in a case of LiMO belonging to a space group R-3m. The peak B is a peak corresponding to a (012) plane of a unit cell which is the minimum unit in a crystal structure in a case of LiMO belonging to a space group R-3m.

The lower limit value of A/B is preferably 1.38 and more preferably 1.40. The upper limit value of A/B is preferably 2.20, more preferably 2.00, and particularly preferably 1.90. Examples of A/B include 1.38 to 2.25, 1.38 to 2.20, 1.40 to 2.00, and 1.40 to 1.90.

The LiMO in which A/B is within the above-described range has a developed layered structure, and appropriately includes a rock salt structure. The development of the layered structure makes it possible to carry out planar lithium ion conduction; and in the rock salt structure portion, it is possible to carry out three-dimensional, that is, lithium ion diffusion in a direction perpendicular to the plane of the layered structure. **In** this manner, the rate performance of the lithium secondary battery in which the above-described LiMO is used as the CAM is improved.

"Measurement of average convexity and the like" is performed by the following method.

An convexity of the LiMO is a ratio of a length of an envelope line to a peripheral length measured in a planar image of the LiMO. Here, the peripheral length refers to a length of an outer periphery of a shape of the LiMO, and the length of an envelope line refers to a length of a closed curve in which all lines connecting contact points between convex portions are straight lines among all closed curves touching the convex portions of the outer periphery of the LiMO. As the convexity is smaller, the amount of unevenness of the LiMO shape is larger; and as the convexity is closer to 1, the amount of unevenness between the vertices of the LiMO shape is smaller. The average convexity of the LiMO is a value obtained by measuring and calculating the convexities of a plurality of particles contained in 200 or more LiMO, and calculating the average thereof.

The LiMO contains particles having an area-equivalent circular diameter of 1 to 5 µm (hereinafter, referred to as particles X).

An aspect ratio of the particles X is a ratio of a short axis to a long axis measured in a planar image of the particles X. Specifically, the aspect ratio is a ratio of a length of a short side to a length of a long side of the minimum rectangle circumscribing the planar image of the particles X. It can be determined that, as the aspect ratio is smaller, the shape of the particles X is flatter, and as the aspect ratio is closer to 1, the shape of the particles X approaches a true sphere. An average aspect ratio of the particles X is a value obtained by measuring the aspect ratios of 200 or more, for example, 282 particles X, and calculating the average thereof. When the number of the particles X present in one image is less than 200, a plurality of images are used such that the number of the particles X is 200 or more. In this case, aspect ratios of all the particles X included in the plurality of images used are measured.

A circularity of the particles X is a value represented by 4π × (Area)/(Circumference length)² measured in the planar image of the particles X. As the circularity is smaller, the particles X have a flat shape, and as the circularity is closer to 1, the particles X approach a true sphere. An average circularity of the particles X is a value obtained by measuring and calculating the circularity of 200 or more particles X, and calculating the average thereof.

The average convexity of the LiMO and the area-equivalent circular diameter, average aspect ratio, and average circularity of the particles X can be measured by a static automatic image analysis device (for example, Morphologi G3, Malvern Panalytical Ltd.).

Specifically, the measurement can be performed by the following method. A plurality of (200 or more) particles contained in the LiMO are introduced into a supply unit of the above-described analysis device, and sprayed onto a preparation to be fixed. The fixed particles are observed with an optical microscope to acquire an image. The acquired image is analyzed, and the average convexity of the LiMO and the area-equivalent circular diameter, the average aspect ratio, and the average circularity of the particles X are calculated.

The lower limit value of the average convexity of the LiMO is preferably 0.972, more preferably 0.974, and particularly preferably 0.976. The upper limit value of the average convexity of the LiMO is preferably 0.990 and more preferably 0.988. Examples of the average convexity of the LiMO include 0.972 to 1.000, 0.972 to 0.990, 0.974 to 0.988, and 0.976 to 0.988. When the average convexity is within the above-described range, it can be said that the plurality of particles in the LiMO have a shape with a small amount of unevenness between the vertices. By using the LiMO having such particles, a contact area between a conductive material of the lithium secondary battery and the LiMO is increased, and thus the lithium ion conduction path is increased. As a result, the rate performance of the lithium secondary battery is improved.

The lower limit value of the average aspect ratio of the particles X is preferably 0.770, more preferably 0.772, particularly preferably 0.774, and still more preferably 0.775. The upper limit value of the above-described average aspect ratio is preferably 0.798, more preferably 0.794, and still more preferably 0.790. Examples of the above-described average aspect ratio include 0.770 to 0.798, 0.770 to 0.794, 0.772 to 0.794, 0.774 to 0.790, and 0.775 to 0.790. When the average aspect ratio is within the above-described range, it can be said that the plurality of the particles X have a shape close to a sphere. As a result, a filling density of the LiMO can be increased, and thus the rate performance of the lithium secondary battery can be further improved.

The lower limit value of the average circularity of the particles X is preferably 0.920, more preferably 0.925, particularly preferably 0.929, and still more preferably 0.930. The upper limit value of the above-described average circularity is preferably 0.954, more preferably 0.952, and still more preferably 0.950. Examples of the average circularity of the particles X include 0.920 to 0.954, 0.920 to 0.952, 0.925 to 0.952, 0.929 to 0.950, and 0.930 to 0.950. When the average circularity is within the above-described range, the filling density of the LiMO can be enhanced, and thus the rate performance of the lithium secondary battery can be further improved.

The LiMO preferably contains Li, Ni, and an element M1. The element M1 is one or more elements selected from the group consisting of Co, Mn, and Al. In addition, the LiMO is preferably represented by the following compositional formula (A).

Li[Liₓ(Ni_{(1-a-b)}M1ₐM2_{b})₁₋ₓ]O₂ ... (A)

(in the compositional formula (A), M1 is one or more elements selected from the group consisting of Co, Mn, and Al, M2 is one or more elements selected from the group consisting of Cu, Ti, Mg, W, Mo, Nb, Zn, Sn, Zr, Ga, B, Si, S, and P, and -0.1 ≤ x ≤ 0.2, 0 ≤ a ≤ 0.2, and 0 ≤ b ≤ 0.1 are satisfied)

From the viewpoint of obtaining a lithium secondary battery having a high cycle retention rate, x is preferably -0.05 or more, and more preferably -0.02 or more. In addition, from the viewpoint of obtaining a lithium secondary battery having a higher initial Coulombic efficiency, x is more preferably 0.10 or less, and still more preferably 0.05 or less.

Examples of x include -0.05 to 0.10 and -0.02 to 0.05.

From the viewpoint of obtaining a lithium secondary battery having high charge and discharge capacity and high rate performance, a + b is 0.3 or less, preferably 0.28 or less and more preferably 0.25 or less. a + b is 0 or more, preferably 0.05 or more, and more preferably 0.07 or more.

Examples of a + b include 0 to 0.3, 0.05 to 0.28, and 0.07 to 0.25.

From the viewpoint of obtaining a lithium secondary battery having high rate performance and high cycle retention rate, a is preferably 0.005 or more, and more preferably 0.01 or more. a is preferably 0.10 or less.

Examples of a include 0.005 to 0.2 and 0.01 to 0.10.

In a case where LiMO contains the M2, from the viewpoint of obtaining a lithium secondary battery having high rate performance and high cycle retention rate, b is preferably 0.005 or more, and more preferably 0.01 or more. b is preferably 0.08 or less, and more preferably 0.05 or less.

Examples of b include 0.005 to 0.08 and 0.01 to 0.05.

From the viewpoint of obtaining a lithium secondary battery having high rate performance and high cycle retention rate, the M2 is preferably one or more elements selected from the group consisting of Ti, Mg, W, B, Nb, and Zr, and more preferably one or more elements selected from the group consisting of W, B, Nb, and Zr.

From the viewpoint of discharge capacity and rate performance, a crystal structure of the LiMO is preferably a layered structure, and more preferably a hexagonal crystal structure or a monoclinic crystal structure. The crystal structure of the LiMO can be confirmed using a powder X-ray diffractometer (for example, Ultima IV manufactured by Rigaku Corporation).

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6₁, P6₅, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

In addition, the monoclinic crystal structure belongs to any one space group selected from the group consisting of P2, P2₁, C2, Pm, Pc, Cm, Cc, P2/m, P2₁/m, C2/m, P2/c, P2₁/c, and C2/c.

Among the above, in order to obtain a lithium secondary battery having high discharge density and high rate performance, the crystal structure of the LiMO is particularly preferably a hexagonal crystal structure belonging to the space group R-3m or a monoclinic crystal structure belonging to the space group C2/m.

### <Method for producing lithium-metal composite oxide>

The LiMO is obtained by calcining MCC and a lithium compound. First, a method for producing the MCC will be described.

### (1) Method for producing MCC

The MCC may be any of a metal composite hydroxide, a metal composite oxide, and a mixture thereof. The metal composite hydroxide and the metal composite oxide contain at least Ni, contain Ni, the above-described element M1, and the above-described element M2 at a mole ratio represented by Formula (A') as an example, and are represented by Formula (A"). a, b, M1, and M2 in Formulae (A') and (A") are the same as a, b, M1, and M2 in the above-described compositional formula (A).

Ni:M1:M2 = (1 - a - b):a:b (A')

Ni_{(1-a-b)}M1ₐM2_{b}O_{α}(OH)_{2-β} (A")

(Formula (A") preferably satisfies 0 ≤ α ≤ 3, -0.5 ≤ β ≤ 2, and β - α < 2)

The method for producing the MCC includes a step of mixing a nickel salt solution, a metal salt solution of the element M1, an optional complexing agent, and an alkali solution to produce a metal composite hydroxide. In this case, the above-described M2 may be added thereto. The metal composite hydroxide can be produced by a batch-type co-precipitation method or a continuous co-precipitation method.

Hereinafter, a method for producing the MCC containing Ni and the element M1 will be described as an example. Specifically, a metal composite hydroxide represented by Ni₍₁₋ₐ₎M1ₐ(OH)₂ is produced by reacting a nickel salt solution with a metal salt solution of the element M1 and a complexing agent as necessary, according to a continuous co-precipitation method described in JP-A-2002-201028. a is the same as in the compositional formula (A") described above.

A nickel salt which is a solute of the nickel salt solution is not particularly limited, and for example, at least one of nickel sulfate, nickel nitrate, nickel chloride, or nickel acetate can be used.

A metal salt of the element M1, which is a solute of the metal salt solution of the element M1, is not particularly limited, and for example, a sulfate, a nitrate, a chloride, or an acetate of the element M1 can be used. Examples thereof include cobalt sulfate, cobalt nitrate, cobalt chloride, cobalt acetate, manganese sulfate, manganese nitrate, manganese chloride, manganese acetate, aluminum sulfate, aluminum nitrate, aluminum chloride, and aluminum acetate.

The nickel salt solution and the metal salt solution of the element M1 are used at a proportion corresponding to the compositional ratio of Ni₍₁₋ₐ₎M1ₐ(OH)₂ described above. That is, in the nickel salt solution and the metal salt solution of the element M1, the mole ratio of Ni and the element M1 is used at a proportion corresponding to (1-a):a. In addition, as a solvent of these solutions, water is used.

The complexing agent is capable of forming a complex with a nickel ion and an ion of the element M1 in an aqueous solution, and examples thereof include ammonium ion donors (ammonium hydroxide, ammonium sulfate, ammonium chloride, ammonium carbonate, ammonium fluoride, and the like), hydrazine, ethylenediaminetetraacetic acid, nitrilotriacetic acid, uracildiacetic acid, and glycine.

In the step of producing the metal composite hydroxide, the complexing agent may or may not be used. In a case where the complexing agent is used, a mole ratio of an amount of the complexing agent contained in a mixed solution of the nickel salt solution, the metal salt solution of the element M1, and the complexing agent is more than 0 and 2.0 or less with respect to the total number of moles of the nickel salt and the metal salt of the element M1.

**In** order to adjust the pH value of the mixed solution, an aqueous solution of an alkali metal hydroxide is added to the mixed solution before the pH of the mixed solution changes from alkaline to neutral. The alkali metal hydroxide is, for example, sodium hydroxide or potassium hydroxide.

The value of pH in the present specification is defined as a value measured in a case where the temperature of the mixed solution is 40°C. In a case where the sampled mixed solution is not 40°C, the mixed solution is heated or cooled to 40°C, and then the pH is measured.

During the reaction, the temperature of the reaction vessel is controlled, for example, within a range of 20°C to 80°C, preferably 30°C to 70°C.

In addition, in the reaction, the pH value of the mixed solution in the reaction vessel is set to in a range of 10 to 13, preferably in a range of 10 to 12, and fluctuation of the pH is controlled within ±0.5. When the production conditions of the metal composite hydroxide, particularly the pH value in the reaction vessel, are set to be in the above-described range and fluctuation of the pH is controlled to be within ±0.5, the amount of the sulfate group contained in the metal composite hydroxide can be appropriately adjusted.

A reaction precipitate formed in the reaction vessel is neutralized under stirring. The time for neutralization of the reaction precipitate is, for example, 1 to 20 hours.

As the reaction vessel which is used in the continuous co-precipitation method, an overflow type reaction vessel can be used to separate the formed reaction precipitate.

In a case of producing the metal composite hydroxide by a batch co-precipitation method, examples of the reaction vessel include a reaction vessel which does not include a overflow pipe, and a device that has a mechanism for concentrating the overflowed reaction precipitate in a concentrating tank connected to the overflow pipe and circulating it back to the reaction vessel.

Various gases, for example, an inert gas such as nitrogen, argon, and carbon dioxide, an oxidizing gas such as an air and oxygen, or a mixed gas thereof, may be supplied into the reaction vessel.

After the above reaction, the obtained reaction precipitate is washed and isolated. As the isolation, for example, a method of dewatering a slurry containing the reaction precipitate by centrifugal separation, suction filtration, or the like is used.

The reaction precipitate is preferably washed with water or an alkaline washing liquid. In the present embodiment, the reaction precipitate is preferably washed with an alkaline washing liquid and more preferably washed with a sodium hydroxide aqueous solution. In addition, the reaction precipitate may be washed using a washing liquid containing a sulfur element. Examples of the washing liquid containing a sulfur element include a sulfate aqueous solution of potassium or sodium.

The isolated reaction precipitate is dried and sieved appropriately to obtain the metal composite hydroxide.

An amount (mass proportion) of the sulfate group in the metal composite hydroxide is preferably 3,000 to 8,500 ppm and more preferably 3,500 to 7,800 ppm. By using the metal composite hydroxide in which the content of the sulfate group is within the above-described range, it is possible to obtain the LiMO in which A/B and the average convexity are within the above-described ranges. **In** addition, it is easy to control the average aspect ratio and the average circularity of the particles X within the above-described ranges.

**In** the present specification, the sulfate group means SO₄²⁻. The "amount of sulfate group" contained in the metal composite hydroxide is determined by measuring the amount of the sulfur element contained in the metal composite hydroxide using an ICP emission spectrometer, and converting the obtained value into the sulfate group (SO₄).

**In** a case where the MCC is a metal composite oxide, the metal composite hydroxide is heated to produce the metal composite oxide. A plurality of heating steps may be carried out as necessary. The heating temperature in the present specification means a set temperature of a heating device. **In** a case of having a plurality of heating steps, the heating temperature means a temperature of a step in which the heating is performed at the highest temperature among the respective steps.

A heating temperature is preferably 400°C to 700°C and more preferably 450°C to 680°C. When the heating temperature is 400°C to 700°C, the metal composite hydroxide is sufficiently oxidized.

Examples of a time for retaining at the above-described heating temperature include 0.1 to 20 hours, and the time is preferably 0.5 to 10 hours. A temperature rising rate to the above-described heating temperature is, for example, 50 to 400 °C/hour. **In** addition, as the heating atmosphere, it is possible to use an air, oxygen, nitrogen, argon, or a mixed gas thereof.

The inside of the heating device may be under an appropriate oxygen-containing atmosphere. The oxygen-containing atmosphere may be a mixed gas atmosphere of an inert gas and an oxidizing gas, or may be a state in which an oxidizing agent is present in an inert gas atmosphere. In a case where the inside of the heating device is an appropriate oxygen-containing atmosphere, a transition metal which is contained in the metal composite hydroxide is appropriately oxidized, and it is easier to control a form of the metal composite oxide.

As oxygen or the oxidizing agent in the oxygen-containing atmosphere, a sufficient number of oxygen atoms need to be present in order to oxidize the transition metal.

In a case where the oxygen-containing atmosphere is a gas mixture atmosphere of an inert gas and an oxidizing gas, the atmosphere in the heating device can be controlled by a method such as aeration of the oxidizing gas into the heating device or bubbling of the oxidizing gas in the mixed solution.

As the oxidizing agent, it is possible to use a peroxide such as hydrogen peroxide, a peroxide salt such as permanganate, perchloric acid, hypochlorous acid, nitric acid, halogen, ozone, or the like.

The MCC can be manufactured by the above-described steps.

### (2) Mixing of MCC with lithium compound

The present step is a step of mixing the lithium compound and the MCC to obtain a mixture.

As the above-described lithium compound, at least one of lithium carbonate, lithium nitrate, lithium acetate, lithium hydroxide, lithium oxide, lithium chloride, or lithium fluoride can be used. Among the above, any one of lithium hydroxide and lithium carbonate or a mixture thereof is preferable.

The lithium compound and the MCC are mixed in consideration of the compositional ratio of a final target product to obtain the mixture. An amount (mole ratio) of Li contained in the lithium compound with respect to the total amount of 1 of elements other than the oxygen atom (for example, Ni, the element M1, and the element M2), contained in the MCC, is preferably 1.00 or more, and more preferably 1.02 or more. The LiMO is obtained by calcining the mixture of the lithium compound and the MCC as described below.

### (3) Calcining of mixture (calcining step)

The LiMO is obtained by calcining the mixture of the MCC and the lithium compound. In the calcining step, primary calcining and secondary calcining at a temperature higher than the primary calcining are performed. Furthermore, a calcining stage in which the calcining temperature and the calcining time are different may be performed before the primary calcining or after the secondary calcining.

The calcining temperature in the present specification means a temperature of an atmosphere in a calcining furnace, and refers to the highest temperature of a retention temperature in each calcining step.

The calcining temperature in the primary calcining is preferably a temperature lower than the calcining temperature in the secondary calcining, which is preferably 500°C to 850°C, more preferably 600°C to 800°C, and particularly preferably 600°C or higher and lower than 700°C. When the calcining temperature is equal to higher than the lower limit value of the above-described range, LiMO having a firm crystal structure can be obtained. **In** addition, when the calcining temperature is equal to or lower than the upper limit value of the above-described range, volatilization of lithium ions on the particle surface of the LiMO can be reduced.

The retention time in the primary calcining is preferably 1 to 8 hours. When the retention time in the primary calcining is 1 hour or more, the reaction between the MCC and the lithium compound is sufficiently enhanced. When the retention time in the primary calcining is 8 hours or less, the volatilization of lithium ions is less likely to occur, and the battery performance is likely to be improved. By subjecting the mixture to the primary calcining, a reactant is obtained.

After the primary calcining, the reactant may be crushed. The reactant is crushed by, for example, a stone mill type grinder (for example, a mass colloider MKCA2 manufactured by MASUKO SANGYO CO.,LTD.), a pin mill (for example, AVIS100S manufactured by MILLSYSTEM), a disc mill, a roller, a mortar, or the like. The reactant is preferably crushed using a stone mill type grinder or a roller.

In a case where the stone mill type grinder is used, it is preferable that a gap between an upper millstone and a lower millstone is adjusted according to the aggregation state of the reactant. The gap between the upper millstone and the lower millstone is, for example, preferably in a range of 10 to 1,000 µm. A rotation speed of the stone mill type grinder is preferably 800 to 1,500 rpm. In a case where a pin mill is used, the rotation speed is preferably 300 to 20,000 rpm. In a case where a disk mill is used, the rotation speed is preferably 12 to 1,200 rpm. In a case where the reactant is crushed under such conditions, heat conduction to the reactant is likely to be favorable during secondary calcining described later.

Next, the reactant is subjected to secondary calcining. A temperature of the secondary calcining is preferably 500°C to 1,000°C, more preferably 600°C to 900°C, particularly preferably 650°C to 800°C, and still more preferably 700°C to 760°C. When the secondary calcining temperature is equal to higher than the lower limit value of the above-described range, LiMO having a firm crystal structure can be obtained. In addition, when the calcining temperature is equal to or lower than the upper limit value of the above-described range, volatilization of lithium ions on the particle surface of the LiMO can be reduced. In particular, when the calcining temperature during the secondary calcining is 700°C to 760°C, it is easy to obtain the LiMO in which A/B and the average convexity are within the above-described ranges. Furthermore, the average aspect ratio and the average circularity of the particles X can be controlled within the above-described ranges.

The retention time in the secondary calcining is preferably 1 to 50 hours. When the retention time in the secondary calcining is 1 hour or more, the reaction between unreacted MCC in the reactant and the lithium compound is sufficiently enhanced. When the retention time in the secondary calcining is 50 hours or less, the volatilization of lithium ions is less likely to occur, and the battery performance is likely to be improved.

**In** this case, the reactant is subjected to the secondary calcining in a state of being accommodated in a container such as a sagger and a crucible. Among the above, it is preferable that the container is a sagger, and the reactant is accommodated in a state of being spread on a bottom surface of the container with a thickness of 1 to 20 mm, preferably 2 to 16 mm and more preferably 3 to 15 mm. When the reactant is calcined in such a state, the reactant is uniformly and sufficiently calcined, and it is possible to obtain the LiMO in which A/B and the average convexity are within the above-described ranges.

The mixture or the reactant of the MCC and the lithium compound may be calcined in the presence of an inert melting agent. The inert melting agent may remain in the calcined product, or may be removed by washing the LiMO after calcination with a washing liquid or the like, which will be described later. As the inert melting agent, for example, those described in WO2019/177032A1 can be used.

### (4) Crushing step

After the secondary calcining, the obtained calcined product is crushed. The calcined product is crushed by, for example, a stone mill type grinder (for example, a mass colloider MKCA2 manufactured by MASUKO SANGYO CO.,LTD.), a pin mill (for example, AVIS100S manufactured by MILLSYSTEM), a disc mill, a roller, a mortar, or the like.

In a case where the stone mill type grinder is used, it is preferable that a gap between an upper millstone and a lower millstone is adjusted according to the aggregation state of the calcined product. The gap between the upper millstone and the lower millstone is, for example, preferably 10 to 200 µm. A rotation speed of the stone mill type grinder is preferably 500 to 2,000 rpm. In a case where a pin mill is used, the rotation speed is preferably 300 to 20,000 rpm. In a case where a disk mill is used, the rotation speed is preferably 12 to 1,200 rpm.

The crushing means for the calcined product is selected according to the container or the like used in the secondary calcining. For example, in a case where the reactant is subjected to the secondary calcining using the sagger in a state of being spread on the bottom surface of the container with a thickness of approximately 1 to 20 mm, any of the above-described crushing means can be used. In a case where the reactant is subjected to the secondary calcining using the sagger in a state of being spread on the bottom surface of the container with a thickness of approximately 1 to 20 mm, the reactant is easily uniformly and sufficiently calcined. Therefore, even in a case where the calcined product is crushed using a means having a low degree of crushing, such as a roller and a mortar, it is possible to obtain the LiMO in which A/B and the average convexity are within the above-described ranges, and it is easy to control the average aspect ratio and the average circularity of the particles X in the above-described ranges.

In a case where the secondary calcining is carried out using a container having a depth, such as a crucible, it is preferable that the calcined product is crushed using a stone mill type grinder. Since the stone mill type grinder can perform the crushing stronger than a roller, a mortar, or the like, it is possible to obtain the LiMO in which A/B and the average convexity are within the above-described ranges. In addition, it is easy to control the average aspect ratio and the average circularity of the particles X within the above-described ranges.

### (5) Other steps

After the crushing step, the crushed calcined product may be washed to remove unreacted residual lithium compounds and inert melting agents. For the washing, pure water or an alkaline washing liquid can be used. Examples of the alkaline washing liquid include aqueous solutions of one or more anhydrides selected from the group consisting of lithium hydroxide, sodium hydroxide, potassium hydroxide, lithium carbonate, sodium carbonate, potassium carbonate, and ammonium carbonate, and aqueous solutions of a hydrate thereof. In addition, aqueous ammonia can also be used as the alkaline washing liquid.

A temperature of the washing liquid is preferably 15°C or lower, more preferably 10°C or lower, and still more preferably 8°C or lower. The lower limit value of the temperature of the washing liquid is, for example, 3°C. By controlling the temperature of the washing liquid within a range in which the washing liquid does not freeze and within the above-described range, excessive elution of lithium ions from the crystal structure of the calcined product into the washing liquid during the washing can be suppressed.

Examples of a method of bringing the washing liquid into contact with the calcined product include a method of putting the calcined product into each washing liquid and stirring the washing liquid. In addition, a method of applying each washing liquid to the calcined product as shower water may be used. Furthermore, a method may be adopted in which the calcined product is put into the washing liquid, stirred, and then separated from each washing liquid, and each washing liquid is used as shower water and poured onto the calcined product after the separation.

In the washing, it is preferable to bring the washing liquid and the calcined product into contact with each other for an appropriate range of time. The "appropriate time" in the washing refers to a time during which each particle of the calcined product is dispersed while removing the unreacted lithium compound and the inert melting agent, remaining on the surface of the calcined product. A washing time is preferably adjusted depending on the aggregation state of the calcined product. For example, an appropriate washing time may be set by performing a preliminary experiment. The washing time is particularly preferably, for example, in a range of 5 minutes to 1 hour.

A proportion of the calcined product to the total mass of the mixture (hereinafter, may be described as a slurry) of the washing liquid and the calcined product is preferably 10% to 60% by mass, more preferably 20% to 50% by mass, and still more preferably 30% to 50% by mass. When the proportion of the calcined product is within the above-described range, the unreacted lithium compound and the inert melting agent can be removed.

After the calcined product is washed, it is preferable that the calcined product is subjected to a heat treatment. The temperature and method of the heat treatment are not particularly limited, but from the viewpoint that it is possible to prevent a decrease in charge capacity, it is preferably 150°C or higher, more preferably 175°C or higher, and still more preferably 200°C or higher. In addition, although not particularly limited, from the viewpoint that the volatilization of lithium ions can be prevented and the LiMO having the above-described composition can be obtained, the temperature is preferably 1,000°C or lower and more preferably 950°C or lower. The amount of lithium ions volatilized can be controlled by the temperature of the heat treatment.

Examples of the heat treatment temperature include 150°C to 1,000°C, 175°C to 950°C, and 200°C to 950°C.

Examples of the atmosphere in the heat treatment include an oxygen atmosphere, an inert atmosphere, a reduced pressure atmosphere, and a vacuum atmosphere. In a case where the heat treatment after the washing is performed in the above-described atmosphere, a reaction between the calcined product and moisture or carbon dioxide in the atmosphere is suppressed during the heat treatment, and thus the LiMO containing a few impurities can be obtained.

The LiMO can be produced by the above-described production method.

### <Lithium secondary battery>

Next, a configuration of a suitable lithium secondary battery in a case of using the LiMO according to the present embodiment in the CAM will be described.

In addition, a positive electrode suitable for a lithium secondary battery (hereinafter, may be referred to as a positive electrode) in a case of using the LiMO according to the present embodiment in the CAM will be described.

Furthermore, a lithium secondary battery suitable as a positive electrode application will be described.

An example of the lithium secondary battery suitable for a case in which the LiMO according to the present embodiment is used has a positive electrode, a negative electrode, a separator interposed between the positive electrode and the negative electrode, and an electrolytic solution disposed between the positive electrode and the negative electrode.

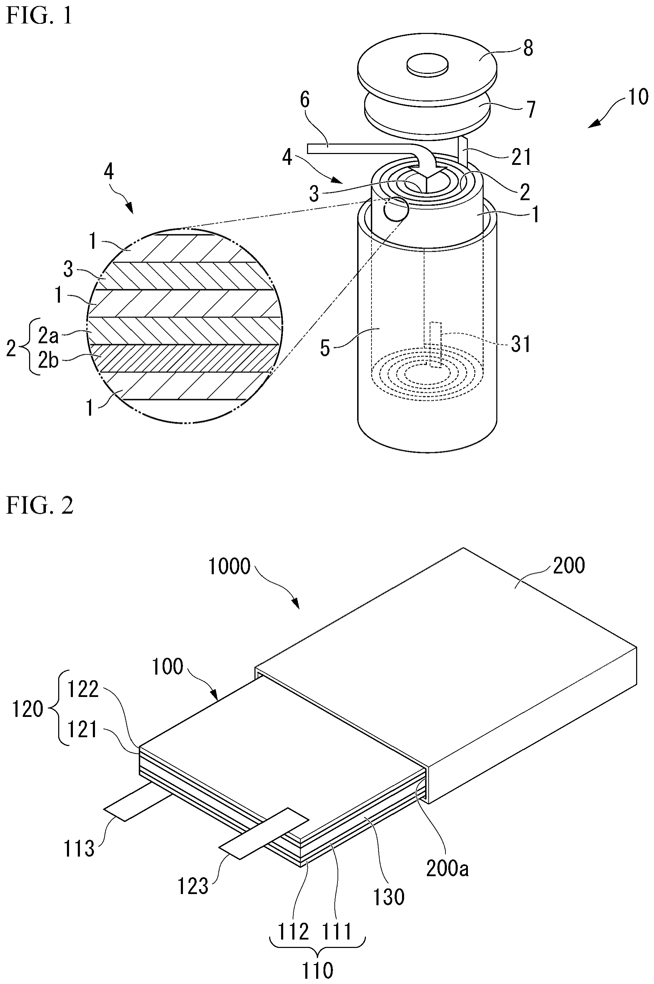

FIG. 1 is a schematic view showing an example of the lithium secondary battery. For example, a cylindrical lithium secondary battery 10 is manufactured as described below.

First, as shown in the partially enlarged view of FIG. 1, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 are wound to form an electrode group 4.

The positive electrode 2 includes, for example, a positive electrode active material layer 2a containing the CAM and a positive electrode current collector 2b having the positive electrode active material layer 2a formed on one surface thereof. The positive electrode 2 can be produced by first preparing a positive electrode mixture containing the CAM, a conductive material, and a binder, and supporting the positive electrode mixture on one surface of the positive electrode current collector 2b to form a positive electrode active material layer 2a.

As an example of the negative electrode 3, an electrode in which a negative electrode material mixture containing a negative electrode active material (not shown) is supported on a negative electrode current collector, and an electrode consisting of a negative electrode active material alone are exemplary examples, and the negative electrode 3 can be produced in a manner similar to that for the positive electrode 2.

Next, the electrode group 4 and an insulator (not shown) are accommodated in a battery can 5, and a can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

Examples of a shape of the electrode group 4 include a columnar shape in which the cross-sectional shape is a circle, an ellipse, a rectangle, or a rectangle with rounded corners, in a case where the electrode group 4 is cut in a direction perpendicular to a winding axis.

In addition, as the shape of the lithium secondary battery having such an electrode group 4, a shape that is specified by IEC60086, which is a standard for batteries specified by the International Electrotechnical Commission (IEC) or by JIS C 8500, can be adopted. For example, shapes such as a cylindrical shape and a square shape can be exemplary examples.

Furthermore, the lithium secondary battery is not limited to the above-described winding-type configuration, and may have a lamination-type configuration of a laminated structure in which the positive electrode, the separator, the negative electrode, and the separator are repeatedly stacked. As the lamination-type lithium secondary battery, a so-called coin-type battery, button-type battery, or paper-type (or sheet-type) battery can be exemplary examples.

For the positive electrode, the separator, the negative electrode, and the electrolytic solution constituting the lithium secondary battery, for example, the configurations, materials, and production methods described in [0113] to [0140] of WO2022/113904A1 can be used.

### <All-solid-state lithium secondary battery>

The CAM according to the present embodiment can be used as a CAM of an all-solid-state lithium secondary battery.

FIG. 2 is a schematic view showing an example of the all-solid-state lithium secondary battery according to the present embodiment. An all-solid-state lithium secondary battery 1000 shown in FIG. 2 has a laminate 100 having a positive electrode 110, a negative electrode 120, and a solid electrolyte layer 130, and an exterior body 200 accommodating the laminate 100. In addition, the all-solid-state lithium secondary battery 1000 may have a bipolar structure in which a positive electrode active material and a negative electrode active material are disposed on both sides of a current collector. Specific examples of the bipolar structure include the structures described in JP-A-2004-95400. A material which configures each member will be described below.

The positive electrode 110 has a positive electrode active material layer 111 and a positive electrode current collector 112. The positive electrode active material layer 111 contains the above-described CAM and a solid electrolyte. In addition, the positive electrode active material layer 111 may contain a conductive material and a binder.

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material.

The laminate 100 may have an external terminal 113 which is connected to a positive electrode current collector 112 and an external terminal 123 which is connected to a negative electrode current collector 122. In addition, the all-solid-state lithium secondary battery 1000 may have a separator between the positive electrode 110 and the negative electrode 120.

The all-solid-state lithium secondary battery 1000 further has an insulator (not shown) which insulates the laminate 100 and the exterior body 200 from each other and a sealant (not shown) which seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin-type, a button type, a paper-type (or a sheet-type), a cylindrical type, a square shape, and a laminate type (pouch type) can be exemplary examples.

As the example of the all-solid-state lithium secondary battery 1000, a form in which one laminate 100 is provided is shown in the drawing, but the present embodiment is not limited thereto. The all-solid-state lithium secondary battery 1000 may have a configuration in which the laminate 100 is used as a unit cell and a plurality of unit cells (laminates 100) is sealed inside the exterior body 200.

For the all-solid-state lithium secondary battery, for example, the configurations, materials, and production methods described in [0151] to [0181] of WO2022/113904A1 can be used.

Since the lithium secondary battery having the above-described configuration uses the above-described LiMO as the CAM, the rate performance can be improved.

In addition, since the positive electrode having the above-described configuration uses the above-described LiMO as the CAM, the rate performance of the lithium secondary battery can be improved.

Furthermore, since the lithium secondary battery having the above-described configuration has the above-described positive electrode, the rate performance is high. Examples

Hereinafter, the present invention will be described in detail with examples, but the present invention is not limited to the following description.

### <Composition analysis>

Composition analysis of LiMO produced by a method described later was carried out by the method of [Composition analysis of LiMO] described above.

### <Amount of sulfate group>

An amount of sulfate group contained in a metal composite hydroxide was measured by the method of "Amount of sulfate group" above.

### <A/B>

A/B of LiMO was measured by the method of "Measurement of A/B" described above.

### <Static automatic image analysis>

An average convexity of LiMO, and an area-equivalent circular diameter, an average aspect ratio, and an average circularity of particles X were measured by the method of "Measurement of average convexity and the like" described above.

### <Rate performance>

A lithium secondary battery produced by, using LiMO obtained by the production method described later, the method described in "Manufacturing of positive electrode for lithium secondary battery" and "Manufacturing of lithium secondary battery" was measured by the method of "Rate performance" described above.

### (Example 1)

After water was poured into a reaction vessel equipped with a stirrer and an overflow pipe, a sodium hydroxide aqueous solution was added thereto, and the liquid temperature was retained at 70°C.

A mixed raw material solution was prepared by mixing a nickel sulfate aqueous solution, a manganese sulfate aqueous solution, and an aluminum sulfate aqueous solution such that a mole ratio of Ni, Mn, and Al was 0.93:0.035:0.035.

Next, the mixed raw material solution was continuously added to a reaction vessel under stirring, using an ammonium sulfate aqueous solution as a complexing agent. A sodium hydroxide aqueous solution was added dropwise thereto at appropriate times so that the pH of the mixed solution in the reaction vessel reached 12 (measurement temperature: 40°C) to obtain a reaction precipitate 1.

The reaction precipitate 1 was washed, dewatered, dried, and sieved to obtain a metal composite hydroxide 1 containing Ni, Mn, and Al.

The metal composite hydroxide 1 was heated in an atmospheric air at 650°C for 5 hours, and cooled to room temperature to obtain MCC-1 as a metal composite oxide.

A predetermined amount of lithium hydroxide was weighed such that the amount (mole ratio) of Li contained in the lithium hydroxide with respect to the total amount 1 of Ni, Mn, and Al contained in the MCC-1 was 1.03. The MCC-1 and the lithium hydroxide were mixed with each other in a mortar to obtain a mixture 1.

The mixture 1 was put into a calcining furnace, and the temperature in the calcining furnace was set to 650°C and maintained for 5 hours in an oxygen-containing atmosphere for primary calcining, thereby obtaining a reactant 1 of the MCC-1 and the lithium hydroxide.

The obtained reactant 1 was crushed using a roller.

A sagger of 12 cm square was filled with the crushed reactant 1 with a thickness of approximately 10 mm, the temperature in the calcining furnace was set to 750°C and maintained for 5 hours to carry out secondary calcining of the reactant 1, thereby obtaining a calcined product 1.

The obtained calcined product 1 was crushed using a mass colloider (manufactured by MASUKO SANGYO CO.,LTD., MKCA2).

The crushed calcined product 1 and pure water having a liquid temperature adjusted to 5°C were mixed to produce a slurry. A mass proportion of the calcined product 1 was 60% by mass with respect to the total mass of the slurry. The slurry was stirred for 20 minutes. Thereafter, the slurry was dewatered and heat-treated at 210°C in a nitrogen atmosphere to obtain LiMO-1.

In a case where compositional analysis of the LiMO-1 was carried out, in the compositional formula (A), x = -0.02, a = 0.07, and b = 0, and the element M1 was Mn and Al.

### (Example 2)

LiMO-2 was obtained by carrying out the same steps as in Example 1, except that the calcined product 1 was crushed using a mortar instead of the mass colloider and the slurry was produced such that the mass proportion of the calcined product 1 was 40% by mass with respect to the total mass of the slurry.

**In** a case where compositional analysis of the LiMO-2 was carried out, in the compositional formula (A), x = -0.02, a = 0.07, and b = 0, and the element M1 was Mn and Al.

### (Example 3)

A crushed reactant 3 was obtained by the method described in Example 1, except that the pH and the like were adjusted such that the amount of the sulfate group in the metal composite hydroxide was 4,030 ppm. A crucible having a volume of 100 mL was filled with the crushed reactant 3, the temperature in the calcining furnace was set to 750°C and maintained for 5 hours to carry out secondary calcining of the reactant 3, thereby obtaining a calcined product 3.

The obtained calcined product 3 was crushed using a mass colloider (manufactured by MASUKO SANGYO CO.,LTD., MKCA2).

The crushed calcined product 3 and pure water having a liquid temperature adjusted to 5°C were mixed to produce a slurry. A mass proportion of the calcined product 3 was 50% by mass with respect to the total mass of the slurry. The slurry was stirred for 20 minutes. Thereafter, the slurry was dewatered and heat-treated at 150°C under reduced pressure to obtain LiMO-3.

In a case where compositional analysis of the LiMO-3 was carried out, in the compositional formula (A), x = 0, a = 0.07, and b = 0, and the element M1 was Mn and Al.

### (Example 4)

After water was poured into a reaction vessel equipped with a stirrer and an overflow pipe, a sodium hydroxide aqueous solution was added thereto, and the liquid temperature was retained at 70°C.

A mixed raw material solution was prepared by mixing a nickel sulfate aqueous solution, a manganese sulfate aqueous solution, and an aluminum sulfate aqueous solution such that a mole ratio of Ni, Mn, and Al was 0.93:0.01:0.06.

Next, the mixed raw material solution was continuously added to a reaction vessel under stirring, using an ammonium sulfate aqueous solution as a complexing agent. A sodium hydroxide aqueous solution was added dropwise thereto at appropriate times so that the pH of the mixed solution in the reaction vessel reached 12 (measurement temperature: 40°C) to obtain a reaction precipitate 4.

The reaction precipitate 4 was washed, dewatered, dried, and sieved to obtain a metal composite hydroxide 4 containing Ni, Mn, and Al.

The metal composite hydroxide 4 was heated in an atmospheric air at 650°C for 5 hours, and cooled to room temperature to obtain MCC-4 as a metal composite oxide.

A predetermined amount of lithium hydroxide was weighed such that the amount (mole ratio) of Li contained in the lithium hydroxide with respect to the total amount 1 of Ni, Mn, and Al contained in the MCC-4 was 1.05. The MCC-4 and the lithium hydroxide were mixed with each other in a mortar to obtain a mixture 4.

The mixture 4 was put into a calcining furnace, and the temperature in the calcining furnace was set to 650°C and maintained for 5 hours in an oxygen-containing atmosphere for primary calcining, thereby obtaining a reactant 4 of the MCC-4 and the lithium hydroxide.

The obtained reactant 4 was crushed using a mass colloider (manufactured by MASUKO SANGYO CO.,LTD., MKCA2).

A crucible having a volume of 100 mL was filled with the crushed reactant 4, the temperature in the calcining furnace was set to 750°C and maintained for 5 hours to carry out secondary calcining of the reactant 4, thereby obtaining a calcined product 4.

The obtained calcined product 4 was crushed using a mass colloider (manufactured by MASUKO SANGYO CO.,LTD., MKCA2).

The crushed calcined product 4 and pure water having a liquid temperature adjusted to 5°C were mixed to produce a slurry. A mass proportion of the calcined product 4 was 50% by mass with respect to the total mass of the slurry. The slurry was stirred for 20 minutes. Thereafter, the slurry was dewatered and heat-treated at 150°C under reduced pressure to obtain LiMO-4.

In a case where compositional analysis of the LiMO-4 was carried out, in the compositional formula (A), x = 0, a = 0.07, and b = 0, and the element M1 was Mn and Al.

### (Example 5)

LiMO-5 was obtained by carrying out the same steps as in Example 4, except that the slurry after the dewatering was heat-treated at 210°C in a nitrogen atmosphere.

In a case where compositional analysis of the LiMO-5 was carried out, in the compositional formula (A), x = -0.01, a = 0.07, and b = 0, and the element M1 was Mn and Al.

### (Comparative Example 1)

LiMO-C1 was obtained by carrying out the same steps as in Example 1, except that the pH and the like were adjusted such that the amount of the sulfate group in the metal composite hydroxide was 7,870 ppm, and the temperature in the calcining furnace during the secondary calcining was set to 770°C.

In a case where compositional analysis of the LiMO-C1 was carried out, in the compositional formula (A), x = -0.05, a = 0.07, and b = 0, and the element M1 was Mn and Al.

### (Comparative Example 2)

A crushed reactant C2 was obtained by the method described in Example 1, except that the pH and the like were adjusted such that the amount of the sulfate group in the metal composite hydroxide was 2,820 ppm. A crucible having a volume of 100 mL was filled with the crushed reactant C2, the temperature in the calcining furnace was set to 750°C and maintained for 5 hours to carry out secondary calcining of the reactant C2, thereby obtaining a calcined product C2.

The obtained calcined product C2 was crushed using a mortar.

The crushed calcined product C2 and pure water having a liquid temperature adjusted to 5°C were mixed to produce a slurry. A mass proportion of the calcined product C2 was 50% by mass with respect to the total mass of the slurry. The slurry was stirred for 20 minutes. Thereafter, the slurry was dewatered and heat-treated at 210°C in a nitrogen atmosphere to obtain LiMO-C2.

In a case where compositional analysis of the LiMO-C2 was carried out, in the compositional formula (A), x = -0.01, a = 0.07, and b = 0, and the element M1 was Mn and Al.

### (Comparative Example 3)

After water was poured into a reaction vessel equipped with a stirrer and an overflow pipe, a sodium hydroxide aqueous solution was added thereto, and the liquid temperature was retained at 70°C.

A mixed raw material solution was prepared by mixing a nickel sulfate aqueous solution, a manganese sulfate aqueous solution, and an aluminum sulfate aqueous solution such that a mole ratio of Ni, Mn, and Al was 0.93:0.06:0.01.

Next, the mixed raw material solution was continuously added to a reaction vessel under stirring, using an ammonium sulfate aqueous solution as a complexing agent. A sodium hydroxide aqueous solution was added dropwise thereto at appropriate times so that the pH of the mixed solution in the reaction vessel reached 12 (measurement temperature: 40°C) to obtain a reaction precipitate C3.

The reaction precipitate C3 was washed, dewatered, dried, and sieved to obtain a metal composite hydroxide C3 containing Ni, Mn, and Al.

The metal composite hydroxide C3 was heated in an atmospheric air at 650°C for 5 hours, and cooled to room temperature to obtain MCC-C3 as a metal composite oxide.

A predetermined amount of lithium hydroxide was weighed such that the amount (mole ratio) of Li contained in the lithium hydroxide with respect to the total amount 1 of Ni, Mn, and Al contained in the MCC-C3 was 1.05. The MCC-C3 and the lithium hydroxide were mixed with each other in a mortar to obtain a mixture C3.

The mixture C3 was put into a calcining furnace, and the temperature in the calcining furnace was set to 650°C and maintained for 5 hours in an oxygen-containing atmosphere for primary calcining, thereby obtaining a reactant C3 of the MCC-C3 and the lithium hydroxide.

The obtained reactant C3 was crushed using a roller.

A sagger of 12 cm square was filled with the crushed reactant C3 with a thickness of approximately 10 mm, the temperature in the calcining furnace was set to 770°C and maintained for 5 hours to carry out calcining of the reactant C3, thereby obtaining a calcined product C3.

The obtained calcined product C3 was crushed using a mass colloider (manufactured by MASUKO SANGYO CO.,LTD., MKCA2).

The crushed calcined product C3 and pure water having a liquid temperature adjusted to 5°C were mixed to produce a slurry. A mass proportion of the calcined product C3 was 50% by mass with respect to the total mass of the slurry. The slurry was stirred for 20 minutes. Thereafter, the slurry was dewatered and heat-treated at 210°C in a nitrogen atmosphere to obtain LiMO-C3.

In a case where compositional analysis of the LiMO-C3 was carried out, in the compositional formula (A), x = -0.02, a = 0.07, and b = 0, and the element M1 was Mn and Al.

Table 1 shows the compositional ratio and amount of sulfate group of the metal composite hydroxide, the crushing method, the container in the secondary calcining, the secondary calcining temperature, the A/B of LiMO, the average convexity, the average aspect ratio, the average circularity, and the rate performance of the lithium secondary battery with regard to Examples 1 to 5 and Comparative Examples 1 to 3.

**[Table 1]**

| | Example 1 | Example 2 | Example 3 | Example 4 | Example 5 | Comparative Example 1 | Comparative Example 2 | Comparative Example 3 |
|---|---|---|---|---|---|---|---|---|
| Compositional ratio (Ni/Ma/Al) | 93/3.5/3.5 | | | 93/1/6 | | 93/3.5/3.5 | | 93/6/1 |
| Amount of sulfate group (ppm) | 7690 | 7690 | 4030 | 7480 | 7480 | 7870 | 2820 | 8640 |
| Crushing method | Mass colloider | Mortar | Mass colloider | Mass colloider | Mass colloider | Mass colloider | Mortar | Mass colloider |
| Container in secondary calcining | Sagger | Sagger | Crucible | Crucible | Crucible | Sagger | Crucible | Sagger |
| Secondary calcining temperature | 750°C | | | | | 770°C | 750°C | 770°C |
| A/B | 1.86 | 1.43 | 1.82 | 1.46 | 1.6 | 2.33 | 1.33 | 1.92 |
| Average convexity | 0.983 | 0.983 | 0.980 | 0.978 | 0.976 | 0.979 | 0.979 | 0.970 |
| Average aspect ratio | 0.774 | 0.784 | 0.777 | 0.776 | 0.774 | 0.780 | 0.799 | 0.795 |
| Average circularity | 0.952 | 0.934 | 0.950 | 0.943 | 0.929 | 0.954 | 0.960 | 0.955 |
| Rate performance (mAh/g) | 147.8 | 159.5 | 155.7 | 167.3 | 147.1 | 129.1 | 138.3 | 135.4 |

In Examples 1 to 5, A/B was 1.43 to 1.86, and the average convexity of the LiMO was 0.976 to 0.983. In addition, the rate performance was 147.1 to 167.3 mAh/g.

On the other hand, in Comparative Examples 1 and 2, A/B was 2.33 and 1.33, and the rate performance was lower than in Examples. In Comparative Example 3, the average convexity was 0.970, and the rate performance was lower than in Examples.

### INDUSTRIAL APPLICABILITY

According to the above-described aspect, it is possible to provide LiMO capable of obtaining a lithium secondary battery having high rate performance, CAM using the same, a positive electrode for a lithium secondary battery, and a lithium secondary battery.

### REFERENCE SIGNS LIST

1: Separator, 2: Positive electrode, 2a: Positive electrode active material layer, 2b: Positive electrode current collector, 3: Negative electrode, 4: Electrode group, 5: Battery can, 6: Electrolytic solution, 7: Top insulator, 8: Sealing body, 10: Lithium econdary battery, 21: Positive electrode lead, 31: Negative electrode lead, 100: Laminate, 110: Positive electrode, 111: Positive electrode active material layer, 112: Positive electrode current collector, 113: External terminal, 120: Negative electrode, 121: Negative electrode active material layer, 122: Negative electrode current collector, 123: External terminal, 130: Solid electrolyte layer, 200: Exterior body, 200a: Opening portion, 1000: All-solid-state lithium secondary battery

## Claims

1. A lithium-metal composite oxide comprising:
at least Ni,
wherein the lithium-metal composite oxide contains a plurality of particles,
in a powder X-ray diffraction measurement of the lithium-metal composite oxide using a CuKα ray, in a case where a diffraction peak on a low-angle side in a range of 2θ = 38.0 ± 0.5° is defined as a peak A and a diffraction peak on a high-angle side is defined as a peak B, a ratio A/B of a half-width of the peak A to a half-width of the peak B is 1.35 or more and 2.25 or less, and
an average convexity of the lithium-metal composite oxide is 0.971 or more and 1.000 or less.

2. The lithium-metal composite oxide according to Claim 1,
wherein an average aspect ratio of particles having an area-equivalent circular diameter of 1 µm or more and 5 µm or less, which are contained in the lithium-metal composite oxide, is 0.770 or more and 0.798 or less.

3. The lithium-metal composite oxide according to Claim 1 or 2,
wherein an average circularity of particles having an area-equivalent circular diameter of 1 µm or more and 5 µm or less, which are contained in the lithium-metal composite oxide, is 0.920 or more and 0.954 or less.

4. The lithium-metal composite oxide according to Claim 1 or 2,
wherein the lithium-metal composite oxide is represented by the following compositional formula (A),
Li[Liₓ(Ni_{(1-a-b)}M1ₐM2_{b})₁₋ₓ]O₂ ... (A)
(in the compositional formula (A), M1 is one or more elements selected from the group consisting of Co, Mn, and Al, M2 is one or more elements selected from the group consisting of Cu, Ti, Mg, Al, W, Mo, Nb, Zn, Sn, Zr, Ga, B, Si, S, and P, and the compositional formula (A) satisfies -0.1 ≤ x ≤ 0.2, 0 ≤ a ≤ 0.2, and 0 ≤ b ≤ 0.1).

5. A positive electrode active material for a lithium secondary battery, comprising:
the lithium-metal composite oxide according to Claim 1 or 2.

6. A positive electrode for a lithium secondary battery, comprising:
the positive electrode active material for a lithium secondary battery according to Claim 5.

7. A lithium secondary battery comprising:
the positive electrode for a lithium secondary battery according to Claim 6.
